# EUROPEAN PATENT SPECIFICATION

(11) **EP 2 084 881 B1**
(45) Date of publication and mention of the grant of the patent: **28.03.2012**
(21) Application number: 07827161.6
(22) Date of filing: 25.09.2007
(51) Int. Cl.: H04L 29/06

(54) **System and methods for Peer-to-Peer Media Streaming**
System und Verfahren zum Peer-to-Peer-Medien-Streaming
Système et procédés de diffusion en continu Poste à Poste d'un Contenu Multimédia

(30) Priority: 28.09.2006 US 847677 P; 27.03.2007 WO PCT/IL2007/000392
(43) Date of publication of application: 05.08.2009
(73) Proprietor: Rayv Inc., Wilmington, DE 19801 (US)
(72) Inventor: LUZZATTI, Omer, 37051 Pardes-Hana (IL); SHEM-TOV, Ofer, 65789 Tel Aviv (IL); LEVY, Oleg, Ramat Gan 52533 (IL); LEVY, Maxim, 64955 Tel Aviv (IL)
(74) Representative: Becker Kurig Straus
(86) International application number: PCT/IL2007/001187
(87) International publication number: WO 2008/038280

(56) References cited:
- EP-A- 1 633 093
- XIAOHUI GU ET AL: "A scalable QoS-aware service aggregation model for peer-to-peer computing grids" HIGH PERFORMANCE DISTRIBUTED COMPUTING, 2002. HPDC-11 2002. PROCEEDINGS. 11TH IEEE INTERNATIONAL SYMPOSIUM ON 23-26 JULY 2002, PISCATAWAY, NJ, USA,IEEE, 23 July 2002 (2002-07-23), pages 73-82, XP010601163 ISBN: 0-7695-1686-6
- LIANG J ET AL: "RandPeer: Membership Management for QoS Sensitive Peer-to-Peer Applications" INFOCOM 2006. 25TH IEEE INTERNATIONAL CONFERENCE ON COMPUTER COMMUNICATIONS. PROCEEDINGS, IEEE, PI, April 2006 (2006-04), pages 1-10, XP031072249 ISBN: 1-4244-0221-2
- MUSHTAQ M ET AL: "Adaptive Packet Video Streaming Over P2P Networks Using Active Measurements" COMPUTERS AND COMMUNICATIONS, 2006. ISCC '06. PROCEEDINGS. 11TH IEEE SYMPOSIUM ON CAGLIARI, ITALY 26-29 JUNE 2006, PISCATAWAY, NJ, USA,IEEE, 26 June 2006 (2006-06-26), pages 423-428, XP010939166 ISBN: 0-7695-2588-1
- ADLER M ET AL: "Optimal peer selection for P2P downloading and streaming" INFOCOM 2005. 24TH ANNUAL JOINT CONFERENCE OF THE IEEE COMPUTER AND COMMUNICATIONS SOCIETIES. PROCEEDINGS IEEE MIAMI, FL, USA 13-17 MARCH 2005, PISCATAWAY, NJ, USA,IEEE, 13 March 2005 (2005-03-13), pages 1538-1549, XP010829315 ISBN: 0-7803-8968-9
- TRAN M ET AL: "SCOPE: Synergistic Content Distribution and Peer-to-Peer Networks" TECHNICAL REPORT TR-06-09, DEPARTMENT OF COMPUTER SCIENCE, IOWA STATE UNIVERSITY, [Online] April 2006 (2006-04), pages 1-42, XP002472030 Retrieved from the Internet: URL:http://archives.cs.iastate.edu/documen ts/disk0/00/00/04/20/00000420-00/report06- 09.pdf> [retrieved on 2008-03-07]

## Description

### REFERENCE TO CO-PENDING APPLICATIONS

This application claims priority from a provisional application No. 60/847,677 filed on September 28, 2006, and from PCT Application No. PCT/IL2007/000392, filed 27 March 2007 and entitled "Real-time media distribution in a P2P network".

### FIELD OF THE INVENTION

The present invention relates generally to the field of network communication and media distribution. More specifically, the present invention relates to a system and method for media streaming in a peer-to-peer (grid) network.

### BACKGROUND OF THE INVENTION

The availability of the Internet enables new techniques adapted to directly distribute multimedia files and real-time media streaming to end-users in an electronic format. The advantages associated with electronic distribution allow media content providers to establish global distribution systems for digital content. Furthermore, new compression algorithms, designed specifically for multimedia data, dramatically reduce the bandwidth and storage space required for the electronic distribution of multimedia data. This, together with the availability of broadband communication, encouraged content providers to adopt the Internet as an alternate distribution system complementing the conventional distribution systems (e.g., cable or satellite TV).

Prior art systems provide various ways for streaming multimedia content, such as voice and video over the Internet. Presently, existing real-time streaming systems over the Internet operate in a 'centralistic' mode in which a server, located in one point, distributes the media (real-time or to be downloaded first and watched later) to the content consumers. One drawback associated with such systems is the need to allocate bandwidth in the central server to satisfy the needs of all consumers. Multicast solutions that allow the distribution of media to a predefined number of users are also known in the art. However, such solutions cannot operate on IP networks, as the existing infrastructure does not support multicasting.

Examples of prior art media streaming systems are described in the following United States Patents and Published Applications:

| | | |
|---|---|---|
| 7,174,385 | Feb 2007 | Li |
| 20020161898 | Oct 2002 | Hartop, et al. |
| 20040236863 | Nov 2004 | Shen, et al. |
| 20060053209 | Mar 2006 | Li; Jin |
| 20060224687 | Oct, 2006 | Popkin, et al. |
| 20060242315 | Oct 2006 | Nichols |

Examples of prior art media streaming systems are also described in:
Hefeeda, et al. Peer-to-Peer Media Streaming Using CollectCast", 2003 Proc. of ACM Multimedia, 2003, pp. 45-54; and in
Zhang, et at. A Data Driver Overlay Network for Efficient Live Media Streaming, 2004.

From the article "SCOPE: Synergistic Content Distribution and Peer-to-Peer Networks", TECHNICAL REPORT TR-06-09, DEPARTMENT OF COMPUTER SCIENCE, IOWA STATE UNIVERSITY of April 2006, a peer-to-peer network is known, in which peers help a content distribution network to deliver its content.

The availability of the Internet enables new methods of directly distributing multimedia files and real-time media transmission to end-users in an electronic format. The advantages associated with electronic distribution are pushing providers of media content to establish global distribution systems for digital content.

The availability of new compression algorithms for multimedia data has dramatically reduced the bandwidth and storage space required for the electronic distribution of these data. It enables a more efficient distribution of the data, and at a higher definition. In the coming years, the availability of broadband may encourage a significant part of the media industry to adopt the Internet as a distribution channel in direct competition with established channels such as cable or satellite TV.

Prior art systems provide various ways for transmitting multimedia such as voice and video over the Internet. Real-time streaming systems over the Internet, such as Microsoft, Real-Networks, SeaChange, and Broad bus deliver systems for real-time streaming content over the Internet. However, all of these systems operate in a 'centralistic' mode in which a server located in one point delivers the media (real-time or to be downloaded first and watched later) to the content consumers. One drawback associated with such prior art systems is the need to allocate bandwidth in the center to satisfy the needs of the consumers.

Distributed networks enable the media to be transmitted from one consumer to another without the need for centralistic streaming servers. As an example, peer-to-peer file sharing systems for PCs are well known in the industry and are a very efficient technology that can be used to deliver media content in a legitimate manner (such as AOL HI-Q, BBC) to complement or replace traditional client-server download or streaming. Examples for such peer-to-peer systems are Bittorrent and Gnutella. All of the above systems do not distribute the files (media or software) in real-time. Users can download the files and consume them afterwards, but, generally speaking, they cannot consume the media while downloading it.

Real-time streaming over a peer-to-peer network is a new phenomenon and examples of such systems are Coolstream (proposed in 2004 by Xinyan Zhang et. "Coolstream: A Data Driver Overlay Network for Efficient Live Media Streaming), and CollectCast: (proposed in 2003 by Hefeeda et al "PROMISE: peer-to-peer media streaming using CollectCast" in Proc. Of ACM Multimedia 2003 pages 45-54).

The state of the art is also represented by US 6,088,360, entitled "Dynamic rate control technique for video multiplexer", US 2005/00883842, entitled "Method of performing adaptive connection admission control in consideration of input call states in differentiated service network", US 2006/0080454, entitled "System and method for receiver-driven streaming in a peer-to-peer network", US 2006/0224687 A1, entitled "Method and apparatus for offline cooperative file distribution using cache nodes", and US 2006/0242315 A1, entitled "System and Method for Intelligent Buffering and Bandwidth Allocation".

### SUMMARY OF THE INVENTION

The invention provides a method, system and computer program product for real-time streaming of media in a peer-to-peer network that includes a current channel swarm as respectively claimed in independent claims 1, 14 and 15. Advantageous embodiments are claimed in dependent claims 2-13.

Certain embodiments of the present invention seek to provide improved Systems and methods for Peer-to-Peer Media Streaming.

Peer-to-peer (grid) networks enable the distribution of media between users without using server centric solutions. As an example, peer-to-peer file sharing systems are well known in the industry and use a very efficient technology to deliver media. Examples for such peer-to-peer systems are BitTorrent® and Gnutella. However, these systems do not distribute the content in real-time. Rather, a user can download the content (files) and view them only when the download has completed, i.e., a user cannot view the file while downloading it. In contrast, according to certain embodiments of the present invention, a user can view a file while downloading it.

Recently, new systems for real-time streaming over peer-to-peer networks have been developed. Examples for such systems may be found in "A Data Driver Overlay Network for Efficient Live Media Streaming" by Zhang, et al. and in "Peer-To-Peer Media Streaming", by Hefeeda, et al. merely for the useful understanding of the background of the invention.

Real-time streaming systems fail to fully utilize the network's resources, as they do not consider the asymmetric nature of the peers (nodes) in a typical network. Specifically, such systems consider the upload bandwidth of nodes as equal to the download bandwidth. This is rarely the case in IP networks, such as ADSL and Cable based networks. In most cases a user's upload bandwidth is half or less of the bandwidth of the download, i.e., a user may receive a larger amount of data in a given period of time than the amount of data that the same user can send out during the same period of time. Another drawback of real-time streaming systems discussed in the related art is the inability to provide different quality-of-service (QoS) to different users or to different broadcast channels. Yet, another drawback is the inability to identify problems in a channel, such as large delays and bandwidth shortage, and further to perform actions to solve these problems.

It would be therefore advantageous to provide a solution to overcome the disadvantages of conventional systems for the purpose of efficient and effective real-time streaming over peer-to-peer networks.

In accordance with certain embodiments, the present invention also provides, in combination with any and all other embodiments and features described herein, a system and method to enable real-time transmission of media in a distributed network (also known as peer-to-peer or grid network). The system and method of the invention dynamically discover the need for additional bandwidth and provide the needed bandwidth by allocating resources from other devices that are connected to the overlay network. In accordance with certain embodiments, these additional devices that share their bandwidth but do not consume the media (e.g. do not watch the stream) are referred to as Amplifiers. In addition to the amplifiers, the network and the swarm contains also Consumers which are nodes (and usually users) that are consuming e.g. watching the media. Note that consumers share their upload bandwidth as well as Amplifiers.

In accordance with certain embodiments, the system and method of the invention provide a mechanism by which the amplifiers function, that is when and how they join and depart from the swarm and what is the logic by which they provide the qualitative service to the swarm and specifically to the media consumers.

In accordance with certain embodiments, additional peers are added to the network and function as amplifiers for guaranteeing high-quality real-time transmission of media.

In accordance with certain embodiments, the problem that the invention solves can be described briefly as follows: in a network in which the sum of the bandwidth contributed (uploaded) to the overlay network by the devices (for the media delivery) is lower than the bandwidth needed (downloaded) for a high-quality media consumption, additional bandwidth has to be supplied to the swarm.

In accordance with certain embodiments, the present invention provides a mechanism to allocate this additional bandwidth by using other devices that may download less bandwidth than the bandwidth they upload to the swarm and by doing so may balance the bandwidth shortage and enable real-time distribution of the media. The ability to download less than upload can be only achieved when the Amplifiers download segments that are needed by more than one consumer, thus they download a piece of media and distribute it to several consumers.

As specified above, the bandwidth that the amplifiers download should be lower than the bandwidth that they upload. In accordance with certain embodiments of the present invention various manners are provided to achieve this goal (thus to find the right downloaded bandwidth (50 in the example above) so that the Gain is maximized.

In accordance with certain embodiments, the amplifiers, added when there is a need for additional bandwidth, have also a mechanism to discover when they are not needed and to shut-down their own operation. Thus, an undesired situation, in which the amplifiers operate without a real need, and transfer bandwidth from one to the other without real consumers in the swarm, is avoided.

In accordance with an aspect of the invention, there is provided a system for enabling a real-time transmission of media in a distributed network of nodes that includes swarm nodes; the swarm nodes include consumer nodes that are configured to process transmitted media; the system is configured to dynamically identify a need for additional bandwidth required to transmit said media and in response thereto allocating to the swarm network at least one amplifier node for providing the additional bandwidth, thereby enabling the transmission of said media.

In accordance with an aspect of the invention, there is also provided a method for enabling a real-time transmission of media in a distributed network of nodes that includes swarm nodes; the swarm nodes include consumer nodes that are configured to process transmitted media; the method comprising dynamically identifying a need for additional bandwidth required to transmit said media and allocating to the swarm network at least one amplifier node for providing the additional bandwidth, thereby enabling the transmission of said media.

In accordance with an aspect of the invention, there is further provided a computer program comprising computer program code means when said program is run on a computer.

In accordance with certain embodiments of the invention, there is provided a system which is configured to dynamically identify the need for additional bandwidth using centralized means.

In accordance with certain embodiments of the invention, there is further provided a system wherein said centralized means includes at least one server node.

In accordance with certain embodiments of the invention, there is still further provided a system which is configured to dynamically identify the need for additional bandwidth in a distributed fashion.

In accordance with certain embodiments of the invention, there is yet further provided a system wherein said need is triggered by a node suffering from lack of sufficient bandwidth.

In accordance with certain embodiments of the invention, there is still further provided a system wherein said need is triggered by said centralized means by monitoring the network of portion thereof.

In accordance with certain embodiments of the invention, there is still further provided a system wherein each one of said amplifier nodes is configured to download less bandwidth than the bandwidth it uploads.

In accordance with certain embodiments of the invention, there is still further provided a system further comprising means configured to use criterion for determining the conditions for at least one amplifier to join to the swarm network.

In accordance with certain embodiments of the invention, there is further provided a system further comprising means configured to use criteria for determining the conditions that dictate that at least one amplifier leaves the swarm network.

In accordance with certain embodiments of the invention, there is further provided a system wherein each amplifier is capable of downloading given segments of media that are needed by the consumers, in order to provide a qualitative service to the consumers of the content.

There is thus provided, in accordance with at least one embodiment of the present invention, a method and system for server control of a P2P network and associated channels, swarms and bandwidth, by identifying needs and directing resources, including but not limited to amplifiers as described herein, to channels and/or swarms according to need e.g. to the channel/s or swarm/s where the resource is most needed. The server control typically utilizes at least one of the following: information characterizing the current status of the channel, the QoS to be supplied to various channels, and a predicted need for additional bandwidth such as, for example, a show whose transmission time is soon, and which is predicted to have a very large audience.

Any suitable processor, display and input apparatus may be used to process, display, store and accept information, including computer programs, in accordance with some or all of the teachings of the present invention, such as but not limited to a conventional personal computer processor, workstation or other programmable device or computer or electronic computing device, either general-purpose or specifically constructed, for processing; a display screen and/or printer and/or speaker for displaying; machine-readable memory such as optical disks, CDROMs, magnetic-optical discs or other discs; RAMs, ROMs, EPROMs, EEPROMs, magnetic or optical or other cards, for storing, and keyboard or mouse for accepting. The term "process" as used above is intended to include any type of computation or manipulation or transformation of data represented as physical, e.g. electronic, phenomena which may occur or reside e.g. within registers and /or memories of a computer.

The above devices may communicate via any conventional wired or wireless digital communication apparatus, e.g. via a wired or cellular telephone network or a computer network such as the Internet.

The apparatus of the present invention may include, according to certain embodiments of the invention, machine readable memory containing or otherwise storing a program of instructions which, when executed by the machine, implements some or all of the apparatus, methods, features and functionalities of the invention shown and described herein. Alternatively or in addition, the apparatus of the present invention may include, according to certain embodiments of the invention, a program as above which may be written in any conventional programming language, and optionally a machine for executing the program such as but not limited to a general purpose computer which may optionally be configured or activated in accordance with the teachings of the present invention.

Any trademark occurring in the text or drawings is the property of its owner and occurs herein merely to explain or illustrate one example of how an embodiment of the invention may be implemented.

### BRIEF DESCRIPTION OF THE DRAWINGS

In order to understand the invention and to see how it may be carried out in practice, embodiments will now be described, by way of non-limiting example only, with reference to the accompanying drawings, in which:
Fig. 1 illustrates the hardware diagram of the system, in accordance with a certain embodiment of the invention;
Fig. 2 illustrates the general architecture of the system, in accordance with a certain embodiment of the invention;
Fig. 3A illustrates exemplary operational scenarios, in accordance with an embodiment of the invention;
Fig. 9 is a simplified block diagram illustration of a peer-to-peer system constructed and operative in accordance with one embodiment of the present invention;
Fig. 10 is a simplified block diagram illustration of a peer-to-peer system constructed and operative in accordance with another embodiment of the present invention;
Fig. 11 is a simplified block diagram illustration of the virtual TV server of Figs. 9 or 10 in accordance with an embodiment of the present invention;
Fig. 12 is a simplified flowchart illustration of a process for selecting peers to be assigned to a user-peer in accordance with an embodiment of the present invention;
Fig. 13 is a simplified flowchart illustration of a process for best peer determination including computing a peer value in accordance with an embodiment of the present invention;
Fig. 14 is a simplified flowchart illustration of a process of allocating resources to channel swarms in accordance with an embodiment of the present invention; and
Fig. 15 is a simplified flowchart illustration of a method of operation of the apparatus of Fig. 11, in accordance with an embodiment of the present invention.

### DETAILED DESCRIPTION OF CERTAIN EMBODIMENTS

Unless defined otherwise, all technical and scientific terms used herein may have the same meaning as commonly understood by one of ordinary skill in the art to which this invention belongs and additionally, in the alternative, may be defined as below.

"File sharing" includes: sharing and distributing files to other users over an electronic network.

"Node" includes: an addressable device or an entity connected to a network or connected to a group. For example, a data download reception unit, a user, a device, an operator, a portable multimedia device, or a server can be referred to as a node. Node may also refer to a module of a software system such as, for example, a media player application.

"Peer" is an equivalent name for Node. However, the term "peers" is used to refer to the group of nodes connected to a specific node from the specific node's perspective. A peer, including a CPU, in a network, may have any of several roles such as consuming or viewing a channel, amplifying including being used as a resource to help the consumers of a channel which the peer itself is typically not consuming, and broadcasting. An "active" peer is one which is currently connected to the system, e.g. typically one whose software is running and connected to a peer-to-peer management service.

"Swarm" includes: a group of many nodes all of which participate in the same media distribution. In the particular case of electronic networks and/or peer-to-peer networks, a swarm may refer to a group of nodes participating in the data transfer of one identified, common media object. A node can be part of different swarms when transferring multiple media objects. For example, a peer can be part of swarm # 1 (distributing TV program #A) and swarm #2 (distributing movie #B). Sometimes this is referred to also as "overlay network".

"Amplifier" includes: a node in the swarm whose role is to increase the total swarm bandwidth. The amplifier's main goal is thus to download a given amount of bandwidth and to contribute (upload) a larger amount of bandwidth to other nodes that are either consumers of the media or amplifiers themselves. The relationship of the download stream and upload stream of the amplifier is termed the `Gain'.

"Consumer" includes: a node in the swarm usually used by users/viewers to watch the media.

"Real-time distribution of Media" also called "Streaming" includes the following meaning: data is a continuous flow of data that must be ultimately presented to a user in a particular sequence in real time. Moreover the flow of data should be presented to the user close to the time it was transmitted from the media source. Digital samples representing an audio signal, for example, must be converted to a sound wave in the same sequence they were transmitted, and at exactly the time spacing they were generated, or some user-specified alternative. Digital data representing video frames require assembly into the proper sequence in the frame for presentation on a display together, and successive frames must display at the correct real-time rate. Real-time distribution may refer to live events and also to pre-generated content that is consumed while being delivered. Real-time distribution of Media (Streaming) can be realized in various known per se techniques.

"Resource" is a peer in a network whose CPU and bandwidth are or may be in use for the benefit of its counterparts in the network which may be watching a channel.

In the description herein, the term "viewer" is construed to include a real-world user who is watching the media and the term "broadcaster" is construed to include the entity (user or community or an automatic agent) transmitting the media. "Client" is construed to include the software or hardware component to watch the media.

In the context of the above referred to definition of node, this term also includes, in accordance with certain embodiments, an entity in the system that is participating in the media delivery itself. A node can have different roles in the transmission of the media: a consumer - whose main object is to fetch the media for the viewer; and an amplifier - whose main objective is to help consumers by contributing its bandwidth to the swarm.

In certain embodiments, media transmission and its control is done in a distributed way within the distributed nodes, e.g. using known per se Mechanisms as described in Ganesh Gossip.

Bearing these definitions in mind (provided for clarity in a non-binding fashion), it is noted that the invention is illustrated and described in a preferred embodiment but it may be produced in many different configurations, forms and materials. There is depicted in the drawings, and will herein be described in detail, various embodiments of the invention, with the understanding that the present disclosure is to be considered as an exemplification of the principles of the invention and the associated functional specifications for its construction, and is not intended to limit the invention to the embodiment illustrated. Those skilled in the art may envision many other possible variations within the scope of the present invention.

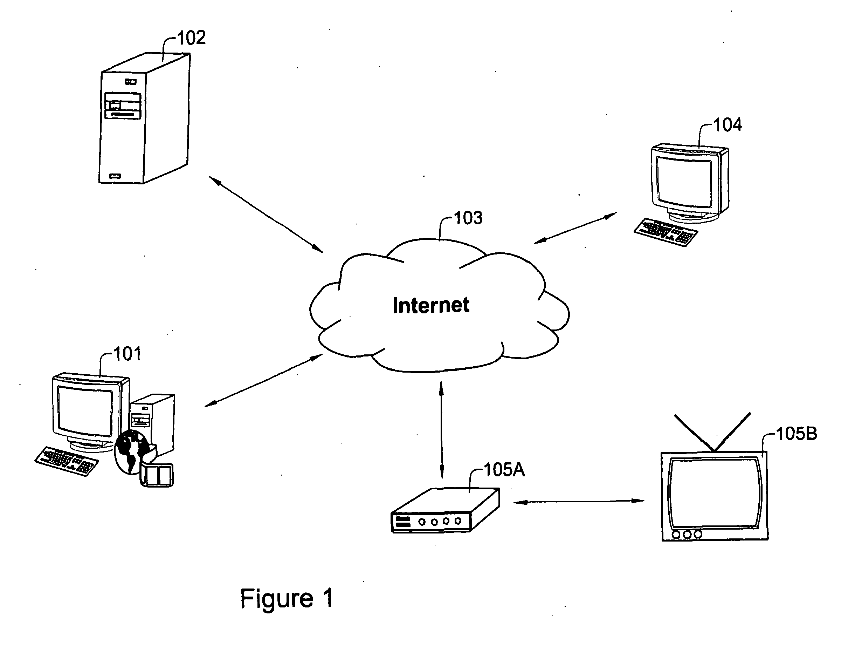

Attention is first drawn to Fig. 1 illustrating the hardware diagram of the system, in accordance with a certain embodiment of the invention.

Thus, the system comprises a broadcasting apparatus (101) that has the media and can be accessed by nodes in the network that may request the media or pieces of it. The broadcasting apparatus can also transfer the media itself to other devices in the electronic network. The media may be a live stream or files accessible to the device. There are several possible ways to implement this apparatus such as, for example, a computer, a media center PC, a personal video recorder, a networked DVD player, a computer with access to a website, a portable media player, a PDA, a mobile phone, or equivalent devices. There may be one or more apparatuses that can be used for one or more users.

The broadcasting apparatus(es) are connected to an electronic network (103), such as the Internet or mobile network, in order to make the content and the information about the content available for nodes to download.

A server (102) or equivalent processing device can receive and process the information received from one or more broadcasting apparatuses (such as the channel's playlist, the shows, the files, and similar). In certain embodiments, the media itself may not be distributed via the server. There may be multiple instances of these servers in the system.

The receiving devices (104, 105) are capable of receiving and transmitting the data forming a media content in a broadcast/multicast transfer or a peer-to-peer transfer. When operating in a peer-to-peer mode, each receiving device is a potential source or sink of data for one or more other receiving devices. Software is usually present on this device so that the device can also operate as the media player. The receiving devices (104, 105) are capable of rendering the content in a direct play-back session (wherein the media player renders the content selected by the user) or in an indirect playback session. A computer, a media center PC, a server, a router, a television with an electronic programming guide, a personal video recorder, a networked DVD player, a computer with access to a website, a portable media player, a PDA, a mobile phone, or equivalent devices are examples of receiving devices.

Note that the invention is not bound by the system architecture described with reference to Fig. 1.

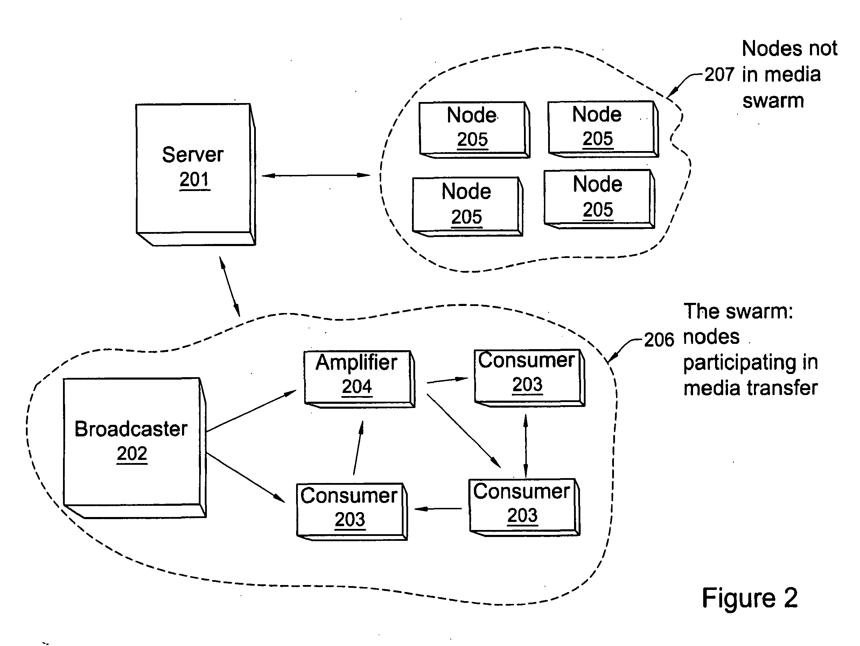

In the description below, reference is occasionally made to the operation of the server, in particular in the context of determining whether there is a need to provide bandwidth support to a given channel(s) by allocating amplifier(s) nodes, and if in the affirmative, to identify the appropriate amplifier nodes that are applicable. Bearing this in mind, attention is drawn to Fig. 2, illustrating the general architecture of the system, in accordance with a certain embodiment of the invention.

Thus, the Server (201) is connected to all devices, including the broadcaster (202) that transmits the media or parts of herein. The transmission of the media may be a live transmission of live events (such as sports, news, concerts), or live transmission of pre-generated content (such as old-movies), or simply transmission of content that may be consumed later on and is being stored on DVR or similar devices. In accordance with certain embodiments, real-time transmission (streaming) of the media to the consumers is improved. Thus, the Broadcaster (202) and the Amplifiers (204) are helping the real-time transmission of the media to the consumers (203) that are watching the media or saving it. All these nodes constitute the Swarm (206) of that specific media transmission/file sharing/TV channel. In addition to the nodes (consumers and amplifiers and broadcasters) in the swarm (206), other nodes (205) may be connected to the server, and are currently neither consuming nor helping (as amplifiers) this specific swarm and this media transmission. Note that these nodes may be parts of other swarms by consuming, amplifying, or even broadcasting another media file or TV channels.

It should be further noted that although in certain embodiments, the server is accessed by all nodes and has a central role in the system, in accordance with other embodiments there is provided a complete (or partial) distributed mechanism, using for example Gossip protocols (by Ganesh and others). In such embodiments the information peers management is all done by the nodes in the network without the intervention of a server in the middle.

Note that the invention is not bound by the system architecture described with reference to Fig. 2.

Before moving on, there follows an exemplary operational scenario for illustrating the role of amplifier, in accordance with an embodiment of the invention.

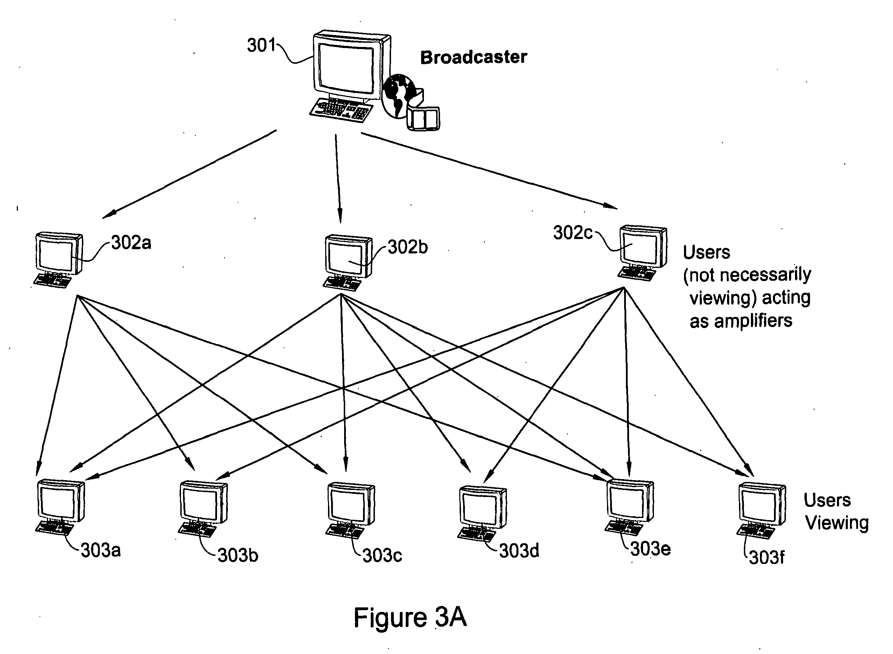

Thus, Fig. 3A describes a situation in which 6 viewers (303a,b,c,d,e,f) would like to watch a transmitted show but the broadcaster (301) does not have the required upload bandwidth to support all of them, for example if the video stream is of 800Kbps (namely download rate is 800Kbps per each one of the specified viewers, giving rise to a total of 4.8Mbps) and the broadcaster upload is only of 2Mbps, it readily arises that only two (out of six) viewers are supported (total of 1.62Mbps) and only partially the third viewer (until the maximum 2Mbps upload is consumed). The amplifiers 302a,b,c (user's client that are not watching the stream) receive parts of the media and stream it (upload it) to the actual viewers. If every amplifier also has, say 2Mbps upload (total 6Mbps) then the total upload provided by them is sufficient to support the group of viewers (requiring a total of 4.8Mbps download rate). As a result, by adding Amplifiers, e.g. nodes that do not watch the channel but help in its transmission, the system managed to support the six viewers.

The invention is not bound by the specified example of Fig. 3A.

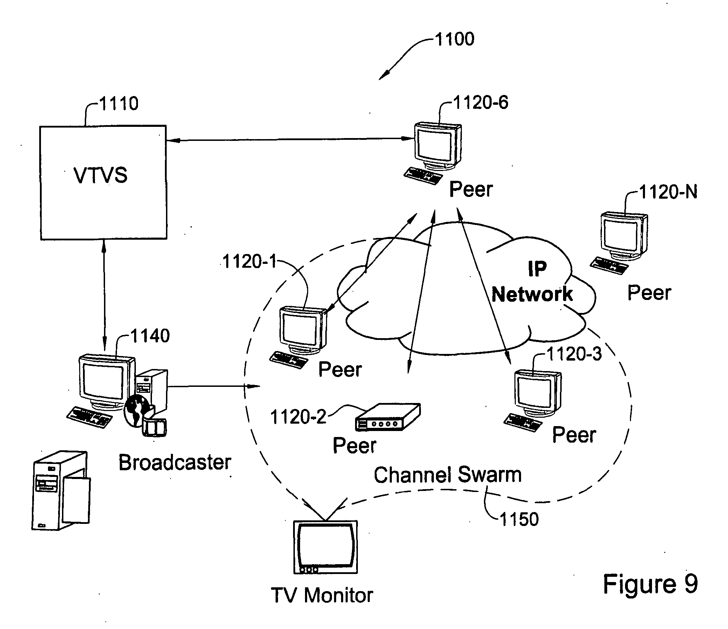

Fig. 9 shows a non-limiting and exemplary diagram of a peer-to-peer system 1100 used to describe the operation of a virtual TV server (hereinafter the "VTVS") 1110 disclosed in accordance with one embodiment of the present invention. The system 1100 typically comprises a plurality of peers 1120 which communicate with each other over an Internet protocol (IP) network 1130. The peers 1120 may comprise, but are not limited to, computers, media control devices, set-up boxes, or any other device capable of exchanging data with other peers connected to it. The IP network 1130 may be any type of synchronous or asynchronous packet-based network, including wireless networks, capable of carrying data information. The system 1100 also includes at least one broadcaster 140 that originates the live stream. The broadcaster 1140 and set of peers 1120 participate in the transmission of the TV-like channel to create a TV channel swarm 1150. The virtual TV server 1110 typically comprises a distributed, scalable, hardware independent system that executes the tasks related to the management of the real-time distribution of media content over the system 1100.

In accordance with one embodiment the virtual TV server 1110 manages the content distribution by selecting the best peers from which a user-peer retrieves the media. A user-peer is a peer that belongs to a newly joined user who wants to watch the channel. A user can view a media content broadcasted in a channel on a display means connected to the peer, such as a TV screen connected to a set-up box or a monitor connected to a personal computer. A peer 1120 communicates with the virtual TV server 1110 using, for example, a suitable computer program executed over the peer. As shown in Fig. 9, the virtual TV server 1110 assigns peers 1120-1, 1120-2 and 1120-3 to a user-peer 1120-6. That is, the user-peer 1120-6 can fetch media from one or more of the peers 1120-1, 1120-2 and 1120-3. It should be noted that the data exchanged between the user-peer 1120-6 and peers 1120-1 through 1120-3 typically does not pass through the virtual TV server 1110.

The virtual TV server 1110 typically decides which are the best peers 1120 to be assigned to the user-peer 1120-6 using dynamic and static information. The dynamic information describes the status of the peers 1120 and the IP network 1170. With this aim, the peers 1120 send periodic information to the virtual TV server 1110, typically comprising metrics characterizing quantities such as but not limited to available bandwidth, quality of received video, delays, and so on. This information is used by the virtual TV server 1110 to analyze the current media streaming quality as well as the status of each peer 1120. The static information may include, but is not limited to, some or all of the following: the quality of service (QoS) to be provided to a specific user, list of peers connected to the user-peer in the past, topological information, and so on. Based on the analysis the virtual TV server 11 10 may further determine whether additional bandwidth should be allocated to a channel by adding more peers to the channel's swarm 1150.

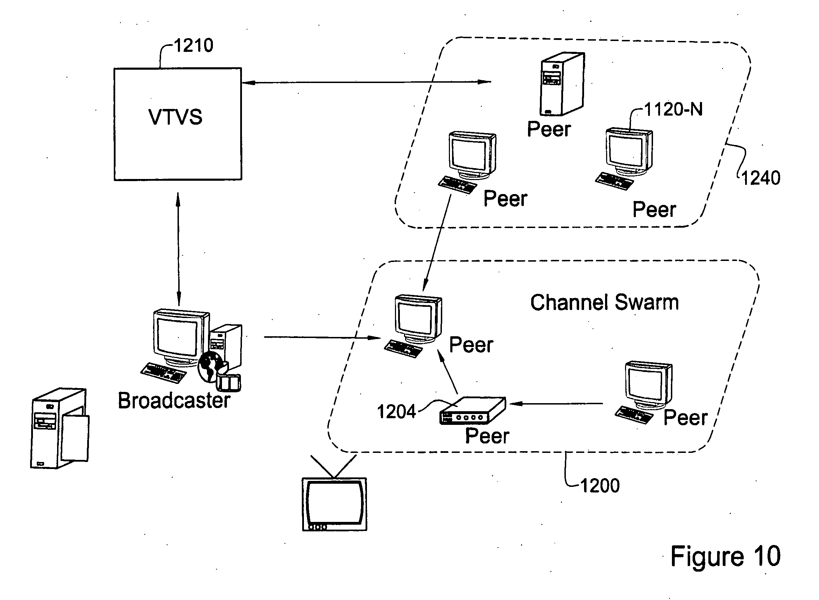

As shown in Fig. 10, the virtual TV server 1110 manages and controls the stream by analyzing the status of the channels' swarms 1150 and determining whether to allocate additional network resources to a channel having poor quality. The network resources are peers in the network with an available upload bandwidth. The virtual TV server 1210 adds a new peer 1220-8 to a channel swarm 1200. Once added to the swarm 1200, the peer 1220-8 helps streaming the media in the swarm 1200. The virtual TV server 1210 maintains a pool 1240 of available resources (peers) that are not part of the swarm 1200. In accordance with another embodiment the resources are dedicated computers that share their bandwidth but do not consume the media (e.g., do not watch the stream). These devices are referred to as Amplifiers and are described herein with reference to Figs. 1 - 8.

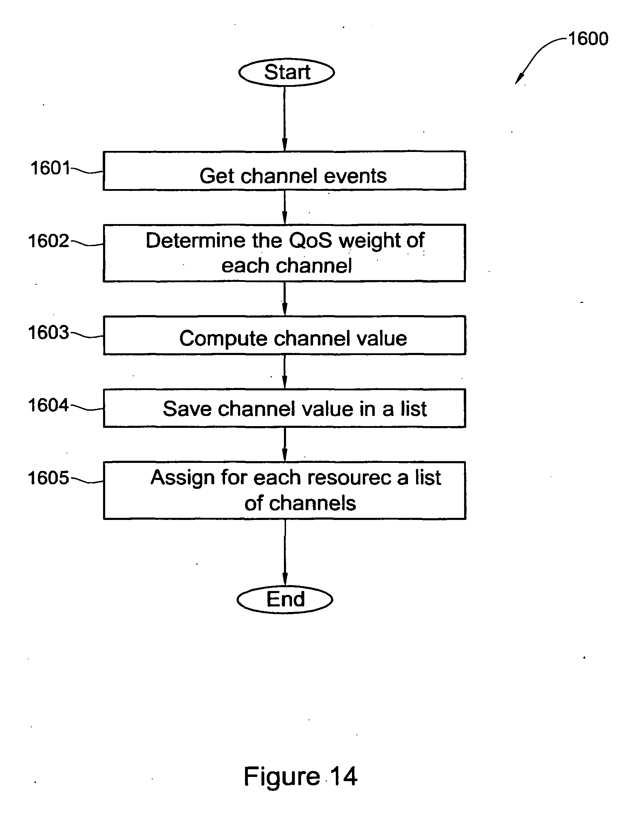

The virtual TV server 1210's decisions on whether or not to add one or more resources from the pool 1240 are based on dynamic information about peers in the swarm 1200 and static information about the QoS guaranteed to a specific channel. The dynamic information further includes measures that determine the quality of a channel (channel events). The channel events are sent periodically (e.g., every 10 seconds) from peers in the swarm 1200 to the virtual TV server 1200. In accordance with one embodiment of the disclosed invention, the QoS of a channel and the channel events are defined by their combined respective weights in order to determine if a resource from the pool 1240 should be added or removed to and or from the swarm 1200. The channel events and the process for allocating resources (and bandwidth) to swarms are discussed in greater detail below with reference to Fig. 14.

It would be apparent to a person skilled in the art that by adding additional bandwidth to the swarm, users can view the channel in better media quality and with shorter delays. Furthermore, this would enable new users that would like to watch the channel, a faster startup from clicking to viewing the channel.

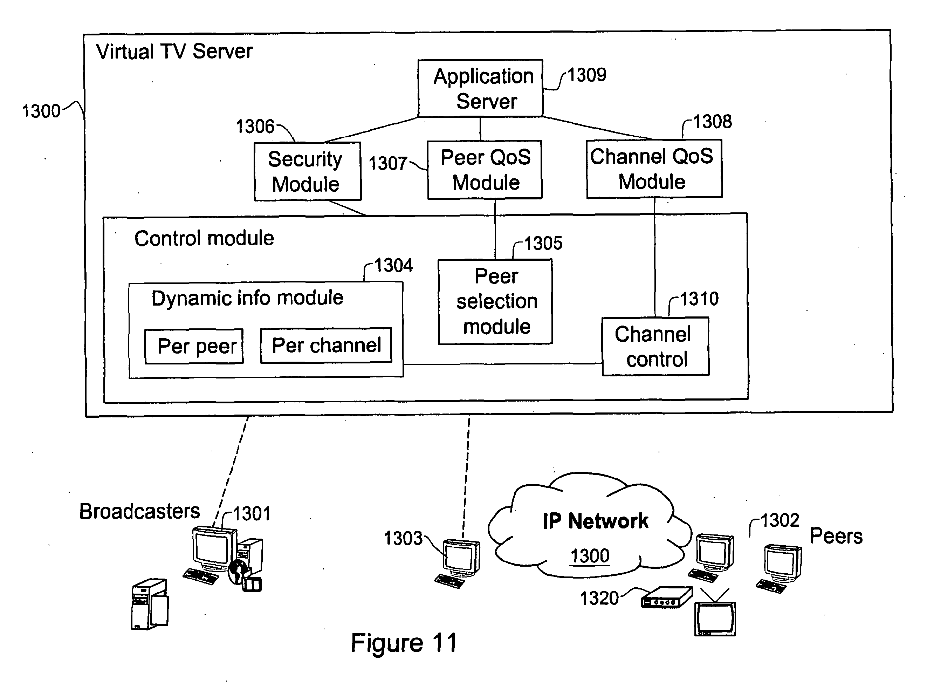

Fig. 11 shows a non-limiting and exemplary block diagram 1300 of the virtual TV server 1300 disclosed in accordance with an embodiment of the present invention. The virtual TV server 1300 monitors and controls the quality of the streams between peers that participate in channels, and further provides QoS to the users and channels. The virtual TV server 1300 also typically provides security facilities 1306 that allow restricting access to the media streams. The virtual TV server 1300 comprises at least the following modules: dynamic information 1304, peer control 1305, channel control 1310, security 1306, peer QoS 1307, channel QoS 1308, and application 1309.

The dynamic information module 1304 is responsible for gathering the periodic information from the peers and to provide quality evaluation to other modules in the virtual TV server 1300. The gathered information includes, but is not limited to, some or all of the following: the bandwidth that a peer currently consumes, whether the peer has more bandwidth to provide others, and the overall quality of a media. From the gathered information the module 1304 computes overall quality of the channel and whether there are missing resources in the channel. The dynamic information module 1304 has two components (per-peer and per-channel). The per-peer component collects information about peers and the per-channel component generates channel quality based on statistical analysis of the peers' information. Module 1304 typically accesses the statistical data packet table.

The peer-control module 1305 is responsible for selecting the best available peers for a specific peer which is either joining a channel's swarm or requires new peers due to lack of bandwidth. The peer selection module 1305 receives information from the dynamic information module 1304 and connects to the peer QoS module 1307 to determine the quality to be provided to the peer. The channel-control module 1310 accesses the channel status table described herein and is responsible for analyzing the channel condition and for adding or removing peers (or resources) from a channel's swarm. The resources are selected from the pool 1240. The module 1305 changes the topology of a swarm if a problem is detected in the channel's swarm or in order to improve the swarm performance. A problem in a channel is the case where there is not enough bandwidth to support the current channel's viewers or viewers that may join soon. A problem may be also detected when the average media quality is too poor or when on average the delays are too high. The channel control module 1305 is further responsible to allocate resources to a new channel, even if no one is watching it, to guarantee fast start-up for the channel when new users join the channel.

The peer QoS module 1307 is responsible to provide the peers with a guaranteed QoS. Parameters, such as the billing information of the peer, the amount of bandwidth it contributes to the network, and a premium service peer, are taken into consideration. It should be noted that, even within the same channel, different QoS levels are defined for different peers (users), for example, paying users versus non-paying users.

The channel QoS module 1308 analyzes the importance of a channel and how much bandwidth should be provided to the channel to guarantee its QoS. The analysis is based on various parameters, such as channel's billing information, the guaranteed quality for the channel, and the business model the channel is subscribed to. Where appropriate, the security module 1306 may ensure that only authenticated users can watch channels and only users authorized to watch a channel in a specific quality and size are able to watch it in those parameters. For a specific user that would like to watch a channel, the security module 1306 may generate tokens provided to peers serving that user. These tokens guarantee that the peer is authorized to receive such media in the specified quality and size.

The application module 1309 is a logic module that implicates the information about the subscribers and the channels and certain logic that is applied to them. Such information may include authentication parameters, authorization, and accounting. This information may also include logic, such as providing better quality to channels with many viewers, and providing less quality to channels that do not broadcast 24 hours a day.

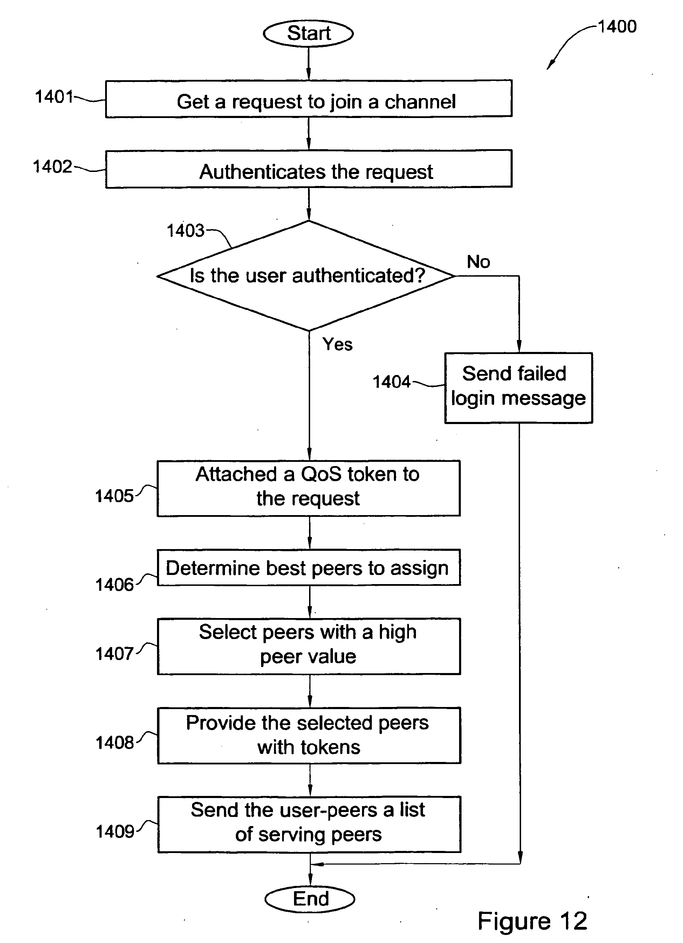

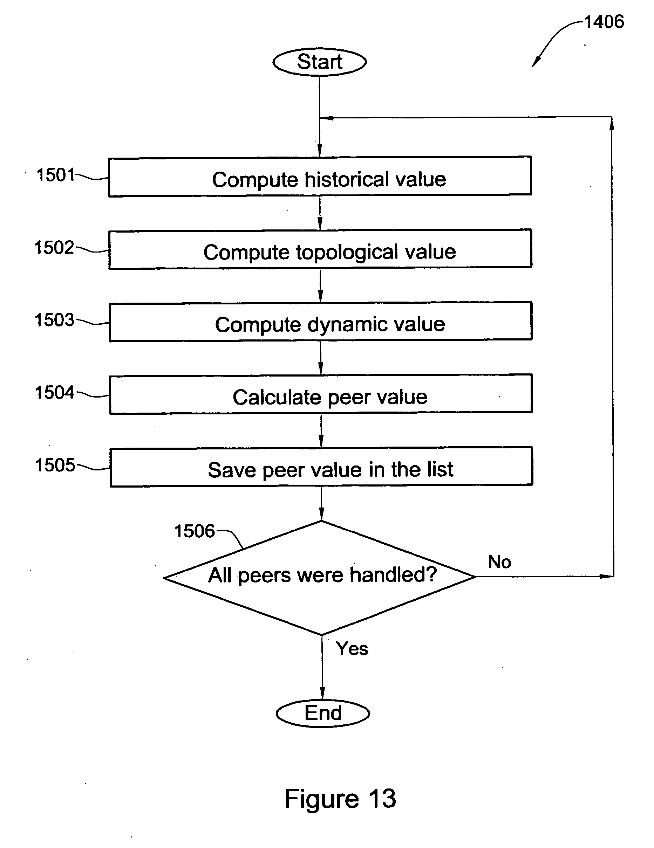

Fig. 12 shows a non-limiting and exemplary flowchart 1400 describing the process for selecting peers to be assigned to a user-peer disclosed in accordance with an embodiment of the present invention. The user-peer can fetch media from the selected peers. The process is executed by the virtual TV server, for example virtual TV server 1110. In step 1401 the virtual TV server receives a request from a user-peer. The request may be to join a channel or to select other peers in case of poor streaming quality. In 1402, the virtual TV server authenticates and authorizes the request. The authentication includes identifying the user of the peer, and the authorization includes determining whether the user is allowed the utilization of the requested service (i.e., joining a specific channel). In step 1403, it is checked if the user is authenticated and authorized, and if so, at step 1405, a QoS token is attached to the request. The QoS token includes the types of media allowed, the quality allowed, the media size, and other parameters. If the authentication failed, at step 1404 the user receives an error message indicating that the user cannot join the channel swarm, and thus cannot watch the channel. Thereafter execution terminates. In step 1406, the best available peers to be assigned to the user-peer are determined and saved in a list (hereinafter the "best available peers list") as described below in detail with reference to Fig. 13.

In step 1407, a pre-defined number of peers having the higher peer-values are selected from the best available peers list. As described in detail below each peer in the best available peers list is assigned with a score. The selection is of a predefined number of peers having the highest score. These peers are assigned to the user-peer. In another embodiment a weighted lottery algorithm is utilized to select the peers to be assigned to the user-peer. Therefore, peers having the higher peer-values are more likely to be selected. With this aim, at step 1408, the selected peers are provided with authorization tokens to ensure that the user is indeed authenticated and authorized to watch the channel. In step 1409, the user-peer is provided with list serving peers, i.e., peers that the user-peers can retrieve data from. The user-peer initiates a request to connect the severing peers. It should be noted that if the user-peer cannot initiate a direct request to the other peers in the network, the virtual TV server may request the other severing peers to initiate the request. Such a scenario is typical if the other peers are behind some configurations of firewalls or network address translation services.

Referring now to Fig. 13, a method for performing step 1406, in accordance with one embodiment of the present invention, is now described. In order to determine the best peers, a peer value is computed for each peer in the network. The peer value is computed using historical value, topological value, and dynamic value. In step 1501, the historical value may be computed using a list of the peers that the user-peer fetched media from or provided media to in the past. The historical value represents the extent to which the peer was, in the past, efficient in providing media to the user-peer. For example, in step 1502, a topological value is computed based on the topology information of the user-peer. For example, peers in the channel's swarm from the same LAN (or at least the same public IP address) could get a high value. Also, peers from the same ISP could get a high topological value.

In some cases, peers from the same country might also get an increased topological value. In some embodiments, peers in the ISP may assign with higher topological value than other peers from the same ISP. The reason is that the channel streaming may swamp the transit connection between the ISPs, saturating upstream links and causing on-network congestion. Providing peers from the same ISP, and in certain embodiments even installing peers with high bandwidth within ISP, solves the problem by reducing the transit out of the ISP and increasing the quality provided to the users within the ISP.

In step 1503, the dynamic value is computed using periodic information gathered from the peers. The dynamic value determines what the available upload bandwidth of the peer is. Peers that have bandwidth to share are sometimes more likely to be assigned to the user-peer. In step 1504, the peer value is computed by combining e.g. computing a weighted or un-weighted sum of the historical, topological, and dynamic values. In step 1505, the peer value is saved in the best available peers list. In step 1506, a check is made to determine if the peer value was computed for each peer in the network, and if so execution continues with step 1407 in Fig. 4; otherwise, execution returns to step 1501 where the peer value is computed for another peer not previously computed.

Fig. 14 shows a non-limiting and exemplary flowchart describing a process 1600 of allocating resources (peers) to channel swarms in accordance with an embodiment of the present intervention. The process periodically (e.g., every 1 minute) determines to which of the channels the resources are most needed. In step 1601, from each channel swarm a list of channel events are received. The channel events may be based on the status of the channel or constant parameters. For example, the channel events may include, but are not limited to, some or all of the following: not enough resources, poor streaming quality, scheduled load (e.g., beginning of a new program, prime-time), or a user-defined event. A channel event includes its identification (ID) number, weight, and expiration time. A channel weight may be a number between zero and one.

In step 1602, the QoS of each channel is determined, using a weight corresponding to the QoS of the channel. For example, the weight of a commercial channel is higher than the weight of a private channel. Generally, this weight is static and is seldom changed. In step 1603, for each channel, a channel value is computed. The channel value at least partially determines how many resources, if any, are needed by the current. This is performed by, for example, computing a simple or weighted sum of a dynamic factor (e.g. weights of the channel events) and a static factor (e.g. weight of the QoS). In step 1604, the channel values of all channels or all relevant channels are saved in a list. In step 1605, each resource (from the pool 1240) is assigned with a list of channels. The number of resources that are assigned to each channel is determined according to the channel value. In another embodiment a weighted lottery algorithm is utilized to determine the number of resources to be assigned for each channel. That is, channels having higher channel-values are likely to get more resources and/or a channel with a high value is more likely to get resources than a channel having a low value.

For example, the channel events streaming quality and scheduled load of a channel "A" have the weights 1 and 0.5 respectively. The QoS weight computed for channel "A" is 0.75. The channel value of "A" is 1+0.5+0.75 = 2.25. The channel events streaming quality and scheduled load of a channel "B" have the weights 0.25 and 0.2.5 respectively. The QoS weight computed for channel "B" is 0. 5. The channel value of "B" is 0.25+0.25+0. 5=1. Therefore, channel "B" needs more resources than channel "A". For example, the number of allocated resources may be predetermined according to the channel value. For instance, channels having a channel value between 0 and 1 may receive 2 resources and channels having channel value between 1 and 2.5 may receive 5 resources. A resource tries to connect to the peers of the channels according to their order in the list, e.g. in descending order of channel value.

A particular feature of an embodiment of the present invention is that the token mechanism and/or Hash described herein are incorporated into a P2P streaming network such as that described herein, for multiple peers that provide Data to one peer.

The system of the present invention typically employs suitable client-server protocols and client-client protocols such as, for example: a Client-Server 'Service protocol' for service related transactions such as Logging-in to the service, joining a channel, leaving a channel, and issuing Server orders to the clients/peers; a Client-Server information protocol for statistical data gathering, e.g. gathering data that may be used by the server to analyze the channel situation and the client status; a Client-client control protocol that handles information about the media, media structures, and security tokens related to the transmission; and a Client-Client data protocol for handling the data exchange itself including streaming.

A description of a typical viewer flow, in which a viewer logs in to the service, joins a channel, and starts watching, now follows.

Login (Authentication and Authorization) - Client Server protocol: The client application first logs-in to the service by issuing a login request to the server. The login request includes information about the peer that may be kept in an Active peer status table (also termed the "peer on-line table") stored in the server and described herein.

Suitable methods for session-key creation, authentication and verification, and for hiding passwords on clear channels, are typically employed. A shared secret-key model could be used e.g. as specified below, or a private-public key mechanism, stronger security wise but often requiring additional server resources (CPU), may be used.

It is assumed that each user has generated a password in a previous registration process. The following security mechanism, operative during the login transaction, the client request and the server response, typically guarantees that, after login, both sides have a secure session key they can use to protect all the other transactions between them (such as Join channel, and statistic sharing):
Client: PDU (user-id, x, hash( x + p ))
Server: PDU ( session-id, sk^h( p) ), h( h( pdu ), sk)

A suitable sequence of operations assuming that the above holds is:
a. Client 1120 generates x, a random string, and performs MD5 or SHA or other well known hash algorithms on x concatenated with its password p.
b. The client then sends the result in the login transaction parameter.
c. The server 1110 validates and Authenticates the user by taking the clear x and the password (from the database), hashing them and confronting with the request.
d. The server then generates a session key, sk, and XORs it with the password hash (without x), and sends it in the response PDU, along with the (normal) session ID.
e. The server then appends the PDU with authentication token, created by concatenating the PDU string with the session key, and hashed using the Hash algorithm (e.g. MD5 or SHA).
f. The client opens the session key (by XORing it back with h(p)), and validates the hash of the PDU with the Session Key.

The last two steps assume the user password is strong (e.g. not vulnerable to dictionary attacks. To increase security, such steps may be carried out on a secured connection (SSL). The rest of the communication may be carried out in the clear.

Joining a channel (Authorization): A viewer who wishes to watch a channel typically issues a "join" transaction to the server providing the ID of the channel that it wishes to watch. Typically, the peer was authenticated previously as described above. The server may accept or decline the viewer request to join/watch the channel after authorizing the viewer to watch that channel. If the request is authorized, the server may select the best peers for that viewer as described in Fig. 12 and may provide an ordered "best peers" list to the peer in need of service. For each of the best peers the server may generate an authorization token that validates that the viewer is indeed authorized to watch the channel. This may be done using a suitable information exchange signaling protocol.

Suitable information exchange control and data exchange/data streaming protocols for Client-Client (peer-peers) control and streaming are now described.

Control protocol - Information exchange protocol: After the server has authenticated a user-peer, authorized it to view an individual channel, and provided it with a list of peers to connect to (along with the tokens indicating the peers that the viewer is indeed authorized), the viewer or user-peer may issue a request to the other peers asking them to stream data to it. In order for them to know whether the viewer is authorized, the viewer may provide them with the tokens generated by the server.

The Server may encode the token provided to a peer B using the public key of the peer B and the private key of the server. This guarantees that the target peer B is the only one able to open the token (using its own private key) and to verify it was indeed created by the server (using the server public key). The token itself comprises 'authorization information' indicating to peerB that peerA is authorized to watch the channel, hence streaming to peerA and being used as a resource of peerA, are both allowable activities. Generally, whenever a peer receives a request from another peer to share data, it verifies the Tokens provided by the requesting party.

In particular, tokens are typically generated in such a way that the Server encodes the token provided to the viewer (peer A) using the shared secret or the public key of the other peers individually. This guarantees that the target peers are the only ones able to open the token (with their own key or their private key) and to verify it was indeed created by the server (the only entity that knows the shared secret key) or by the server public key. The token itself typically comprises 'authorization information' indicating to the peers that peerA is authorized to watch the channel and thus streaming to it and being used as its resource, is allowed.

The Token typically comprises, inter alia, some or all of: The ID of the peer to stream to, the external and internal IPs of the peer to stream to, the Channel that peer A is authorized to watch, the authorized duration of PeerA's watching period, and the streams that peerA is authorized to watch. For example the peer may be authorized to watch only in low quality or only the English audio version.

The term "Data streaming protocol" as used herein refers to a protocol regulating data exchange wherein, after the peers have authorized each other using the server's tokens, they begin to stream and/or fetch data.

Each peer sends periodic information, typically comprising packets termed herein "statistical data packets", to the server. This information may be sent for example every 30 seconds, typically using a request/response protocol such as HTTP or other protocols without awaiting a server reply. The time interval from one Statistical Data packet to another can typically be changed if the server directs the peer to change the statistical data packet interval using the client-server control protocol, e.g. if the server is overloaded with many requests and would like to ease the number of packets it has to process per second.

Each statistical data packet typically comprises some or all of the following periodically gathered statistics: Data received by the statistical-data-packet-sending-peer from the peers that donate/ provide it with the data - in bits per second, Data provided by the statistical-data-packet-sending peer to the peers that receive/accept data from it - in bits per second, Number of peers donating data to the packet sending peer, Number of peers accepting data from the packet sending peer, Percentage of failed requests from among the total (within the period) number of media data packet requests made by the statistical data packet-sending peer to its donors in the course of fetching the media stream e.g. as per the data protocol described herein), Average Video frames per second received, Average Audio frames per second received, and/or an estimation of the number of Bits a peer could contribute, which value is also termed herein the 'health factor' of the peer.

Each statistical data packet may also include information useful for research such as delay between peers, and internal parameters such as cost and load.

The statistical data packets are retrieved by the server and analyzed e.g. as described below. The server typically has a first table to store data arriving in the form of Statistical data packets, and also 2 additional tables, the Active peer status table and the Channel status table, that are updated using the data of the first table as described below.

The Active peer status table is useful for peer status evaluation. Typically, whenever a new user logs in to the server , a new entry is added to this table. Whenever a user logs out of the server, the relevant entry may be deleted from the table. Also, each update from a user's statistical data packet typically updates the relevant parts fields in the table.

More generally, the Active peer status table is typically updated with online information whenever a peer log-ins to the service/network and when sending data statistics information. The information in the table enables the server to know the status of the peer and to decide which peers have better resources to contribute generally, to a certain viewer/peer in particular, and to provide those peers with enough information for them to be able to contact the peers selected. The table may store some or all of the following:
a. Active information for each peer, typically retrieved during login and not updated with every statistical data packet from the peer, typically including some or all of:
   a. the ID of the peer,
   b. the Nickname of a peer,
   c. the External and Internal IP addresses of the peer,
   d. the NAT type of the peer, Although the external and internal IPs of the peer may enable the peer to contact the selected peers, in some cases even having this detailed information does not help the peer contact some of the peers in the list that are behind NATs or Restricting Firewalls. The NAT type of the peer indicates how and if the peer can actually connect to its counterparts. An Open NAT Type means the peer is contactable directly, while a restricted NAT type may indicate that the only way to access the peer is by having the server asking the peer itself to open a connection to the other peers rather than the other peers effecting this connection on their own.
   e. A binary "Amplifier Control field" that indicates whether the peer is under control of the server for purposes of resource allocation. This field can be updated by the service administrators and indicates whether, usually for business reasons, the peer is at all controllable by the server. Examples for cases in which the service operator may decide that a peer should not be controlled by the server include: a peer that was created and put within an ISP (Internet Server Provider) in order to help a specific channel (and thus cannot be moved to another), or a peer that is installed within a certain enterprise to support certain channels and should not be touched and moved to other channels.
b. Parameters updated each time a statistical data packet arrives, typically including some or all of
   a. Status (either Viewing or Amplifying, typically),
   b. Channel the peer is in
   c. Bits per second received,
   d. Bits per second contributed, and
   e. Peer Health (indicating an estimation of the available upload bandwidth still available, typically computed by the peer itself.

The Channel status table is useful for analysis of the overall quality in the channel and for determination of whether help and additional resources are needed. This table is updated periodically from the active peer status table, e.g. once a minute.

The Channel status table typically stores some or all of the following information for each channel available to the peers. The Channel status fields may include some or all of: Channel ID, Number of peers at the channel, Number of amplifiers assigned to the channel, Average number of frames per second broadcast by the channel, Broadcaster Frame per second, Bit-rate of channel's broadcaster, Bit-rate per second received by the channel, and Bit-rate per second provided by the channel.

Based on the Active Peer and Channel status tables the server analyses the situation in each channel, usually immediately after each update of the channel's status table. The server identifies channels in need as described below and assigns suitable, e.g. best peers to support and provide resources to channels found to be in need.

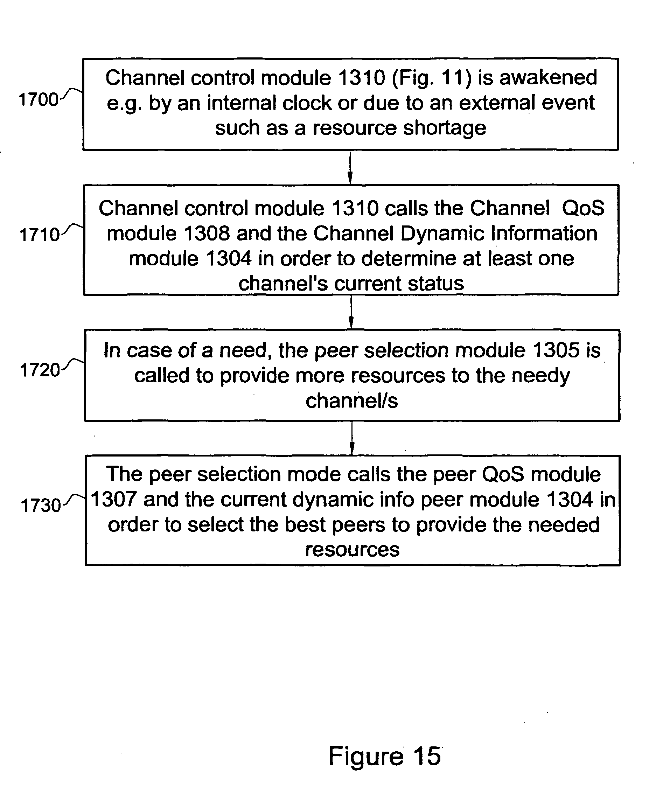

A method of operation of the apparatus of Fig. 11, for maintaining appropriate quality of service for a plurality of user peers being served by other peers, all in accordance with an embodiment of the present invention, is shown in Fig. 15. As shown, the method of Fig. 15 typically includes a plurality of cycles of the following steps:
Step 1700: channel control module 1310 (Fig. 11) is awakened e.g. by an internal clock or due to an external event such as a resource shortage.
Step 1710: Channel control module 1310 calls the Channel QoS module 1308 and the Channel Dynamic Information module 1304 in order to determine at least one channel's current status (degree of need for additional resources), using any of the methods shown and described herein.
Step 1720: In case of a need, the peer selection module 305 is called to provide more resources to the needy channel/s, typically on the basis of information stored in the active peer status table.
Step 1730: The peer selection mode calls the peer QoS module 1307 and the current dynamic info peer module 1304 in order to select the best peers to provide the needed resources.

How to identify channels in need (step 1710): As described above, the server is typically operative to check the channels periodically and decide whether additional resources are needed by certain channels. Typically, a "resource allocation loop" occurs, in which channels are first weighted by the server to reflect their degree of need for additional resources as a function of their statuses. After this computation, resource allocation follows, where priority is given to channels with higher weights. The channel weights may be stored in a separate table, in the channel status table or in the server's memory. The process below describes how, by way of example, the system might compute an overall weight of the channel, typically based on QoS static parameters and dynamic statistical parameters, and then use the channel weight in order to assign resources to the channel.

### Example:

a. QoS weight
   ChannelID 1123 - prestigious channel - QoS weight 100
   ChannelID 1212 -prestigious channel - QoS weight 100
   ChannelID 1125 -small, local channel - QoS weight 7
   ChannelID 1412 -small, local channel - QoS weight 5

   The QoS weights are determined by the Operator or the system e.g. as per commercial considerations.
b. Channel dynamic status weight
   Gathering the information re the peers' FPS (frames per second), enables cannel weight assignment rules to be created such as the following:
   i. 0-5% of viewers with FPS < = 80% of broadcaster FPS: weight = 1
   ii. 5.01%-15% of viewers with FPS < = 80% of broadcaster FPS : weight = 10
   iii. 15.01%-30% of viewers with FPS< =80% of broadcaster FPS: weight = 50
   iv. >30.01% of viewers with FPS < = 80% of broadcaster FPS: weight = 100

   In this example:
   ChannelID 1123: dynamic status weight =1
   ChannelID 1212: dynamic status weight =10
   ChannelID 1125: dynamic status weight =10
   ChannelID 1412: dynamic status weight =100

   The overall weight of the channel is typically the product of the QoS weight and the dynamic status weight. In the present example the channel weights are:
   ChannelID 1123: 100 * 1= 100
   ChannelID 1212: 100 * 10 = 1000
   ChannelID 1125: 7 * 10=70
   ChannelID 1412: 5 * 100 = 500

   Thus the channel with most need is Channel 1212, then Channel 1412, and finally channels 1212 and 1123.
   Triggers are typically provided which may override the above computations e.g. by adding additional weight to a channel due to one or more events that are not part of the constant QoS (importance) of the channel nor of the current status. Triggers may include:
   - an expected high-rating show that is going to start shortly and resources may be needed to support it;
   - starvation calls from peers that call for help (by sending a starvation indication to the server)
   - manual request of the operator to increase the channel's weight without affecting the usual QoS parameter.

The relative size of the channel weights may provide an entry to a weighted random selection of a channel that is to get a resource. In the above example (disregarding triggers) the chances of Channel 1212 to get a resource are 1000/(1000+500+70+100) = 0.6 while the chances of Channel 1123 (CNN) are 100/1670 =0.06.

In steps 1720 and 1730, peers are selected to fulfill detected channel needs. Typically, the parameters used for peer selection may include the available upload bandwidth of the peer (termed herein the "health parameter" and typically stored in the Active Peer status table), the IP address, used by the server to determine the 'topology' of the peer being served and thus to give priority to peers that are located 'nearer' the peer they are selected to serve, and, optionally, a history value quantifying a peer's contribution to that peer in the past. Each of the parameters have a weight which indicates the 'importance' of that parameter in evaluating an individual peer as a candidate to relieve channel need by joining that channel as an amplifier. This weight can be updated by a human operator who may determine that one of the parameters has a more significant value than the others. However, the weights are typically not altered on a regular basis.

Example: This simplified example uses the health parameter of the peers and their IP addresses but not their history values which are believed to be relatively insignificant.

5 peers are in the network, one of which, at IP address 109.90.90.17, needs assistance from its peers, and the remaining 4 of which have the following health values and IP addresses:
Peer 1: health value 100, IP address 109.90.90.123
Peer 2: health value 1000, IP address 44.12.24.152
Peer 3: health value 50, IP address 122.12.24.20
Peer4: health value 400, IP address 109.90.104.21

Moreover, the weight of the health value parameter is 1 and the weights of the topology value parameters are:
Topology: 1 if there is no match with the IP address of the peer to be served (even first octet doesn't match)
   4 for a first octet match (mask 255.0.0.0)
   10 for first and second octet matches (mask 255.255.0.0)
   30 for first, second, and third octet matches (mask 255.255.255.0)

To order the above peers, for the purposes of selecting best peers, compute peer values e.g. using:
peer value = health weight x health value + topology weight x topology value:
Peer 1 = 1 * 100 * 30 = 3000 (topology =30 because of the 3-octet match between 109.90.90.123 and 109.90.90.17)
Peer 2 = 1 * 1000 * 1= 1000 (topology = 1 because of the zero-octet match between 44.12.24.152 and 109.90.90.17)
Peer 3 = 1 * 50 * 1= 50 (topology = 1 because of the zero-octet match between 122.12.24.20 and 109.90.90.17 i.e. no octet match)
Peer 4 = 1 * 400 *10= 4000 (topology = 10 because of the two-octet match between 109.90.104.21 and 109.90.90.17)

The list of best peers, in descending order of bestness, sent as per step 1409 in the method of Fig. 12, may thus comprise, first, peer 4 (which is not the 'closest' but has a higher upload available), then peer 1 which is the closest, then peer 2 and lastly peer 3.

Referring again to Fig. 13, step 1503, dynamic information typically comprises at least one channel quality measure such as the percentage of the peers assigned to that channel which are enjoying good quality. The quality enjoyed by a peer may for example be defined by computing the average frame rate of the peer divided by the average frame rate of the channel (channels are usually 25 or 30 frames-per-seconds). The extent to which this quotient is close to 1.0 indicates good quality. Alternatively or in addition, peer quality may be computed as an increasing function of the bit-rate received by the peer. While generally, frame rate is a good indicator of quality, it suffers from a disadvantage since peers occasionally decide to fetch only 1 frame per minute not due to bad quality of their connection to the channel but rather due to their own low CPU.

As described above, the peer-control module 1305 is responsible for selecting the best available peers for a specific peer which is either joining a channel's swarm or requires new peers due to lack of bandwidth. The peer selection module 1305 receives information from the dynamic information module 1304 and connects to the peer QoS module 1307 to determine the quality to be provided to the peer. The channel-control module 1310 is responsible for analyzing the channel condition and for adding or removing peers (or resources) from a channel's swarm. The resources are selected from the pool 1240. Any suitable method and criteria may serve for selection of good or better or best peers to assign to the task of providing more resources to a needy swarm/channel. The parameters involved in selecting the best peers may comprise any or all of: topological values of each peer and where it is located, historical values of the past contribution of the peer, and/or the current status of the peers i.e. the resources at its disposal.

The server of Fig. 11 typically does not fully 'select' the peers, and typically restricts itself to giving 'advice' to the peers, as to whether and how much they are forecast to contribute. An "experiment" is then typically run live: Peers join a swarm. If they contribute, based on the experimenting, trying to connect to the channel, realizing how much they are contributing and whether remaining in the channel, or leaving it. and 'return' to the pool of 'available resources'.

Generally speaking, the steps of Figs. 12 - 14 may be performed by the following functional units of Fig. 11: Step 1401 may be performed by application server 1309 in conjunction with a Front end (not shown) that deals with the transactions. Step 1402 may be performed by Security module 1306. Step 1403 may be performed by Security module 1306. Step 1404 may be performed by the Front end and/or by application server 1309. Step 1405 may be performed by Security module 1306. Steps 1406 and 1407 may be performed by peer selection module 1305 in conjunction with dynamic information module 1304 and peer QoS module 307. Step 1408 may be performed by Security module 1306 using data from provided by peer selection module 1305. Step 1409 may be performed by the Front-end and/or by Application server 1309.

Steps 1602, 1603 and 1604 of Fig. 14 may be performed by channel control module 1310 using weight and trigger information received from Channel QoS module 1308 and Statistical dynamic weight information received from dynamic information module 1304. For example, step 1602 may use information received from module 1308. Step 1601 is performed by dynamic information module 1304. Step 1605 may be performed by application server module 1309 using the results of channel control module 1310. The list of peers, sorted by degree of suitability to serve as a resource, which is typically formed in step 1505 of Fig. 13, and the list of channels, sorted by degree of need for additional resources, which is typically formed in step 1604, may both be stored in memory in any suitable format.

An embodiment of the invention includes an on-line peer-to-peer streaming system in which broadcasts from one or more channels can be streamed, live, to various peers through various other peers such that viewing is possible during streaming, even though the upload rate of each peer may be much smaller, say by a factor of 5, than its download rate. This is possible due to streaming of some of the content from one or more channels through peers which have not requested such content; these augmenting peers are termed herein "amplifiers" as opposed to user peers which are interested in the content that may be streaming through them. So, if a user peer is in need of channel content, the peer is served by "serving peers" which may be user peers (or "viewing" peers) themselves but may be mere amplifier ("amplifying") peers which are typically compensated in some way by a suitable incentive program. It is appreciated that the system of the present invention typically refrains from detracting from the user experiences of the user peers and particularly the amplifiers such that, for example, a PC acting as a amplifier is typically able to provide its human user with all services other than interaction with channel data, such as email, word processing and so forth, at a level of service which is generally unimpaired compared to a situation in which the peer is not acting as an amplifier.

The present invention should not be limited by software/program, computing environment, specific computing hardware, number of nodes, number of media types, number of users, number of peers, number or type of client devices, or number of broadcasters. The system (i.e., VTSV) according to the invention may be a suitably programmed computer. Likewise, the invention contemplates a computer program being readable by a computer for executing the method of the invention. The invention further contemplates a machine-readable memory tangibly embodying a program of instructions executable by the machine for executing the methods of the inventions disclosed herein. Furthermore, the above enhancements and described functional elements are implemented in various computing environments. For example, the present invention may be implemented on a conventional personal computer (PC) or equivalent, multi-nodal system (e.g., LAN) or networking system (e.g., Internet, WWW, wireless web). The programming of the present invention may be implemented by one of skill in the art.

A system and method has been shown in the above embodiments for the effective implementation of amplifiers in a realtime peer-to-peer distribution of media. While various preferred embodiments have been shown and described, it will be understood that there is no intent to limit the invention by such disclosure, but rather, it is intended to cover all modifications and alternate constructions falling within the scope of the invention, as defined in the appended claims. For example, the present invention should not be limited by software/program, computing environment, specific computing hardware, number of nodes, number of media types, number of viewers, number of amplifiers, number of consumers, or number or type of client devices.

It will also be understood that the system according to the invention may be a suitably programmed computer. Likewise, the invention contemplates a computer program being readable by a computer for executing the method of the invention. The invention further contemplates a machine-readable memory tangibly embodying a program of instructions executable by the machine for executing the method of the invention.

The above enhancements and described functional elements are implemented in various computing environments. For example, the present invention may be implemented on a conventional IBM PC or equivalent, multi-nodal system (e.g., LAN) or networking system (e.g., Internet, WWW, wireless web). The programming of the present invention may be implemented by one of skill in the art of peer-to-peer networking, server based application, and protocol-based network communications programming.

It is appreciated that software components of the present invention including programs and data may, if desired, be implemented in ROM (read only memory) form including CD-ROMs, EPROMs and EEPROMs, or may be stored in any other suitable computer-readable medium such as but not limited to disks of various kinds, cards of various kinds and RAMs. Components described herein as software may, alternatively, be implemented wholly or partly in hardware, if desired, using conventional techniques.

Features of the present invention which are described in the context of separate embodiments may also be provided in combination in a single embodiment. Conversely, features of the invention which are described for brevity in the context of a single embodiment may be provided separately or in any suitable subcombination. The order of steps in the various flowcharts shown and described herein is not intended to be limiting.

## Claims

1. A method for real-time streaming of media in a peer-to-peer network (1130, 1170) that includes a current channel swarm (206), the method comprising:
identifying dynamically, in the course of real-time transmission of a stream of media, a need for additional bandwidth for transmission of the stream of media, for at least one current channel swarm (206) in a peer-to-peer network (1130, 1170);
deciding whether or not to allocate at least one resource from a pool (1240) of resources to the current channel swarm (206) so as to obtain said additional bandwidth for transmission of the stream of media, using bandwidth available in the channel swarm (206), based at least partly on dynamic information about at least one peer in the current channel swarm (206); and
assigning (506, 507) at least one resource from the pool (1240) of resources for providing the additional bandwidth to the channel swarm (206);
**characterized in that**
said stream of media is a live stream of media;
said peer-to-peer network (1130, 1170) includes more than one channel swarms (206) transmitting real-time media, generated by more than one respective broadcasters (1140) associated with more than one respective channels; and
said deciding comprises determining a degree of each channel's need for resources and allocating resources to said channels accordingly.

2. A method according to claim 1, wherein said identifying is performed in the course of real-time transmission of media by a broadcaster (1140), said transmission by a broadcaster (1140) necessitating bandwidth which is a product of a number of viewers in the current channel swarm (206) and a download bandwidth per viewer.

3. A method according to claim 1 wherein at least one of said channels comprises a new channel watched by no-one, and wherein deciding whether or not to allocate comprises allocating resources to said new channel.

4. A method according to claim 1, wherein said determining comprises receiving at least one channel event from each of said channel swarms (206).

5. A method according to claim 4, wherein said channel event includes a channel event weight.

6. A method according to claim 1, wherein said determining and allocating comprises taking into account a respective weight associated with each respective one of said channels, wherein said respective weight is higher for a commercial channel than for a private channel, and wherein taking into account comprises assigning more resources to channels having higher weights.

7. A method according to claim 1 or claim 2, wherein said assigning comprises using at least one peer which downloads less bandwidth than it uploads including downloading a segment of media and distributing said segment to more than one other peers.

8. A method according to claim 1, wherein said identifying is performed in the course of real-time transmission of media by a broadcaster (1140), said transmission by a broadcaster (1140) necessitating bandwidth which is a product of a number of viewers in the current channel swarm (206) and a download bandwidth per viewer.

9. A method according to claim 1 and also comprising maintaining a pool (1240) of available resources for said current swarm (206), said Pool (1240) comprising peers that are not part of said current swarm (206).

10. A method according to claim 1, wherein said assigning comprises maintaining, regarding at least one resource, information indicating whether the resource is controllable for purposes of resource allocation.

11. A method according to claim 1, wherein said dynamic information includes an evaluation of the quality of said at least one channel based on statistical analysis of said peer's information.

12. A method according to claim 1 wherein said deciding takes into account at least one starvation call from at least one peer that calls for help by sending a starvation indicator.

13. A method according to claim 1 or claim 8, wherein said assigning comprises using at least one peer which downloads less bandwidth than it uploads including downloading a segment of media and distributing said segment to more than one other peers.

14. A system for real-time streaming of media in a peer-to-peer network (1130, 1170) that includes a current channel swarm (206), the system comprising:
means for identifying dynamically, in the course of real-time transmission of a stream of media, a need for additional bandwidth for transmission of the stream of media, for at least one current channel swarm (206) in a peer-to-peer network (1130, 1170);
means for deciding whether or not to allocate at least one resource from a pool (1240) of resources to the current channel swarm (206) so as to obtain said additional bandwidth for transmission of the stream of media, using bandwidth available in the channel swarm (206), based at least partly on dynamic information about at least one peer in the current channel swarm (206); and
means for assigning (506, 507) at least one resource from the pool (1240) of resources for providing the additional bandwidth to the channel swarm (206);
**characterized in that**
said stream of media is a live stream of media;
said peer-to-peer network (1130, 1170) includes more than one channel swarms (206) transmitting real-time media, generated by more than one respective broadcasters (1140) associated with more than one respective channels; and
said deciding comprises determining a degree of each channel need for resources and allocating resources to said channels accordingly.

15. A computer program product, comprising a computer-usable code comprising code sections adapted to carry out the steps of one of methods claims 1 to 13 when executed by a computer, processor or other electronic means.

## Patentansprüche

1. Verfahren zum Echtzeit-Streaming von Medien in einem Peer-to-Peer-Netzwerk (1130, 1170), das einen derzeitigen Kanal-Schwarm (206) enthält, wobei das Verfahren umfasst:
dynamisches Bestimmen, im Verlauf einer Echtzeit-Übertragung eines Medien-Streams, eines Bedarfs für zusätzliche Bandbreite zur Übertragung in dem Medien-Stream für mindestens einen derzeitigen Kanal-Schwarm (206) in einem Peer-to-Peer-Netzwerk (1130, 1170),
Entscheiden, ob mindestens eine Ressource von einem Pool (1240) von Ressourcen dem derzeitigen Kanal-Schwarm (206) zugewiesen wird oder nicht, um die zusätzliche Bandbreite zur Übertragung des Medien-Streams zu erhalten, unter Verwendung von Bandbreite, die in dem Kanal-Schwarm (206) verfügbar ist, zumindest teilweise auf Grundlage von dynamischen Informationen über mindestens einen Peer in dem derzeitigen Kanal-Schwarm (206), und
Zuordnen (506, 507) mindestens einer Ressource aus dem Pool (1240) von Ressourcen, um dem Kanal-Schwarm (206) die zusätzliche Bandbreite bereitzustellen, **dadurch gekennzeichnet, dass**
der Medien-Stream ein Live-Medien-Stream ist,
wobei das Peer-to-Peer-Netzwerk (1130, 1170) mehr als einen Kanal-Schwarm (206) enthält, der Echtzeit-Medien überträgt, erzeugt durch mehr als einen jeweiligen Rundfunkanbieter (1140), verknüpft mit mehr als einem jeweiligen Kanal, und
wobei das Entscheiden ein Bestimmen eines Grades des Bedarfs jedes Kanals an Ressourcen und ein entsprechendes Zuweisen von Ressourcen an die Kanäle umfasst.

2. Verfahren nach Anspruch 1, wobei das Bestimmen im Verlauf einer Echtzeit-Übertragung von Medien durch einen Rundfunkanbieter (1140) durchgerührt wird, wobei die Übertragung durch einen Rundfunkanbieter (1140) eine Bandbreite erfordert, die ein Produkt einer Anzahl von Zuschauern in dem derzeitigen Kanal-Schwarm (206) und einer Download-Bandbreite pro Zuschauer ist.

3. Verfahren nach Anspruch 1, wobei mindestens einer der Kanäle einen neuen Kanal umfasst, der von niemandem angesehen wird, und wobei das Entscheiden, ob zugewiesen wird oder nicht ein Zuweisen von Ressourcen an den neuen Kanal umfasst.

4. Verfahren nach Anspruch 1, wobei das Bestimmen ein Empfangen mindestens eines Kanalereignisses von jedem der Kanal-Schwärme (206) umfasst.

5. Verfahren nach Anspruch 4, wobei das Kanalereignis eine Gewichtung des Kanalereignisses enthält.

6. Verfahren nach Anspruch 1, wobei das Bestimmen und das Zuweisen eine jeweilige Gewichtung berücksichtigen, die mit jedem der jeweiligen der Kanäle verknüpft ist, wobei die jeweilige Gewichtung für einen kommerziellen Kanal höher ist als für einen privaten Kanal, und wobei das Berücksichtigen ein Zuordnen von mehr Ressourcen an die Kanäle mit höherer Gewichtung umfasst.

7. Verfahren nach Anspruch 1 oder 2, wobei das Zuordnen die Verwendung mindestens eines Peers umfasst, der weniger Bandbreite herunterlädt als er herauflädt, einschließlich eines Herunterladens eines Abschnitts von Medien und eines Verteilens des Abschnitts an mehr als einen anderen Peer.

8. Verfahren nach Anspruch 1, wobei das Bestimmen während einer Echtzeit-Übertragung von Medien durch einen Rundfunkanbieter (1140) durchgeführt wird, wobei die Übertragung durch einen Rundfunkanbieter (1140) eine Bandbreite erfordert, die ein Produkt einer Anzahl von Zuschauern in dem derzeitigen Kanal-Schwarm (206) und einer Download-Bandbreite pro Zuschauer ist.

9. Verfahren nach Anspruch 1, und ebenfalls umfassend das Verwalten eines Pools (1240) von verfügbaren Ressourcen für den derzeitigen Kanal-Schwarm (206), wobei der Pool (1240) Peers umfasst, die nicht Teil des derzeitigen Kanal-Schwarms (206) sind.

10. Verfahren nach Anspruch 1, wobei das Zuordnen das Verwalten, hinsichtlich mindestens einer Ressource, von Informationen umfasst, die angeben, ob die Ressource zum Zweck einer Zuweisung von Ressourcen steuerbar ist.

11. Verfahren nach Anspruch 1, wobei die dynamischen Informationen eine Bewertung der Qualität des mindestens einen Kanals enthalten, basierend auf einer statistischen Analyse der Informationen des Peers.

12. Verfahren nach Anspruch 1, wobei das Entscheiden mindestens eine Unterversorgungsmeldung von mindestens einem Peer berücksichtigt, der durch Senden einer Unterversorgungsangabe um Hilfe ruft.

13. Verfahren nach Anspruch 1 oder 8, wobei das Zuordnen die Verwendung mindestens eines Peers umfasst, der weniger Bandbreite herunterlädt als er herauflädt, einschließlich eines Herunterladens eines Abschnitts von Medien und eines Verteilens des Abschnitts an mehr als einen anderen Peer.

14. System zum Echtzeit-Streaming von Medien in einem Peer-to-Peer-Netzwerk (1130, 1170), das einen derzeitigen Kanal-Schwarm (206) enthält, wobei das System umfasst:
Mittel, um im Verlauf einer Echtzeit-Übertragung eines Medien-Streams dynamisch einen Bedarf für zusätzliche Bandbreite zur Übertragung des Medien-Streams zu bestimmen, für mindestens einen derzeitigen Kanal-Schwarm (206) in einem Peer-to-Peer-Netzwerk (1130, 1170),
Mittel, um zu entscheiden, ob mindestens eine Ressource von einem Pool (1240) von Ressourcen dem derzeitigen Kanal-Schwarm (206) zugewiesen wird oder nicht, um die zusätzliche Bandbreite zur Übertragung des Medien-Streams zu erhalten, unter Verwendung von Bandbreite, die in dem Kanal-Schwarm (206) verfügbar ist, zumindest teilweise auf Grundlage von dynamischen Informationen über mindestens einen Peer in dem derzeitigen Kanal-Schwarm (206), und
Mittel zum Zuordnen (506, 507) mindestens einer Ressource aus dem Pool (1240) von Ressourcen, um dem Kanal-Schwarm (206) die zusätzliche Bandbreite bereitzustellen,
**dadurch gekennzeichnet, dass**
der Medien-Stream ein Live-Medien-Stream ist,
wobei das Peer-to-Peer-Netzwerk (1130, 1170) mehr als einen Kanal-Schwarm (206) enthält, der Echtzeit-Medien überträgt, erzeugt durch mehr als einen jeweiligen Rundfunkanbieter (1140), verknüpft mit mehr als einem jeweiligen Kanal, und
das Entscheiden ein Bestimmen eines Grades des Bedarfs jedes Kanals an Ressourcen und ein entsprechendes Zuweisen von Ressourcen an die Kanäle umfasst.

15. Computerprogrammprodukt, umfassend einen computerverwendbaren Code, der Codeabschnitte umfasst, die angepasst sind, um die Schritte eines der Verfahrensansprüche 1 bis 13 durchzuführen, wenn sie durch einen Computer, einen Prozessor oder durch andere elektronische Mittel ausgeführt werden.

## Revendications

1. Procédé de diffusion en flux continu en temps réel de contenus multimédias dans un réseau de poste à poste (1130, 1170) comprenant un essaim de canaux actuel (206), le procédé comprenant :
l'identification dynamique, au cours de la transmission en temps réel d'un flux de contenus multimédias, d'un besoin de largeur de bande supplémentaire pour la transmission du flux de contenus multimédias, pour au moins un essaim de canaux actuel (206) dans un réseau de poste à poste (1130, 1170) ;
la décision d'allouer ou pas au moins une ressource d'un groupe (1240) de ressources à l'essaim de canaux actuel (206) afin d'obtenir ladite largeur de bande supplémentaire pour la transmission du flux de contenus multimédias, en utilisant la largeur de bande disponible dans l'essaim de canaux (206), sur la base au moins partiellement d'informations dynamiques sur au moins un poste dans l'essaim de canaux actuel (206) ; et
l'assignation (506, 507) d'au moins une ressource du groupe (1240) de ressources pour fournir la largeur de bande supplémentaire à l'essaim de canaux (206) ;
**caractérisé en ce que**
ledit flux de contenus multimédias est un flux en direct de contenus multimédias ;
ledit réseau de poste à poste (1130, 1170) comprend plusieurs essaims de canaux (206) transmettant des contenus multimédias en temps réel, générés par plusieurs diffuseurs respectifs (1140) associés à plusieurs canaux respectifs ; et
ladite décision comprend la détermination d'un degré de besoin de ressources de chaque canal et l'allocation de ressources aux dits canaux en conséquence.

2. Procédé selon la revendication 1, dans lequel ladite identification est effectuée au cours de la transmission en temps réel de contenus multimédias par un diffuseur (1140), ladite transmission par un diffuseur (1140) nécessitant une largeur de bande qui est un produit d'un nombre de spectateurs dans l'essaim de canaux actuel (206) et d'une largeur de bande de téléchargement par spectateur.

3. Procédé selon la revendication 1, dans lequel au moins l'un desdits canaux comprend un nouveau canal regardé par personne, et dans lequel la décision d'allouer ou pas comprend l'allocation de ressources au dit nouveau canal.

4. Procédé selon la revendication 1, dans lequel ladite détermination comprend la réception d'au moins un événement de canal de chacun desdits essaims de canaux (206).

5. Procédé selon la revendication 4, dans lequel ledit événement de canal comprend un poids d'événement de canal.

6. Procédé selon la revendication 1, dans lequel ladite détermination et ladite allocation comprennent la prise en compte d'un poids respectif associé à chaque canal respectif parmi lesdits canaux, dans lequel ledit poids respectif est supérieur pour un canal commercial à celui pour un canal privé, et dans lequel la prise en compte comprend l'assignation de plus de ressources à des canaux ayant des poids supérieurs.

7. Procédé selon la revendication 1 ou 2, dans lequel ladite assignation comprend l'utilisation d'au moins un poste qui télécharge moins de largeur de bande qu'il n'en charge, y compris le téléchargement d'un segment de contenus multimédias et la distribution dudit segment à plusieurs autres postes.

8. Procédé selon la revendication 1, dans lequel ladite identification est effectuée au cours de la transmission en temps réel de contenus multimédias par un diffuseur (1140), ladite transmission par un diffuseur (1140) nécessitant une largeur de bande qui est un produit d'un nombre de spectateurs dans l'essaim de canaux actuel (206) et d'une largeur de bande de téléchargement par spectateur.

9. Procédé selon la revendication 1, comprenant également le maintien d'un groupe (1240) de ressources disponibles pour ledit essaim actuel (206), ledit groupe (1240) comprenant des postes qui ne font pas partie dudit essaim actuel (206).

10. Procédé selon la revendication 1, dans lequel ladite assignation comprend le maintien, en ce qui concerne au moins une ressource, d'informations indiquant si la ressource est contrôlable à des fins d'allocation de ressource.

11. Procédé selon la revendication 1, dans lequel lesdites informations dynamiques comprennent une évaluation de la qualité dudit au moins un canal sur la base d'une analyse statistique des information dudit poste.

12. Procédé selon la revendication 1, dans lequel ladite décision tient compte d'au moins un appel de pénurie d'au moins un poste qui demande de l'aide en envoyant un indicateur de pénurie.

13. Procédé selon la revendication 1 ou 8, dans lequel ladite assignation comprend l'utilisation d'au moins un poste qui télécharge moins de largeur de bande qu'il n'en charge, y compris le téléchargement d'un segment de contenus multimédias et la distribution dudit segment à plusieurs autres postes.

14. Système de diffusion en flux continu en temps réel de contenus multimédias dans un réseau de poste à poste (1130, 1170) comprenant un essaim de canaux actuel (206), le système comprenant :
un moyen pour effectuer l'identification dynamique, au cours de la transmission en temps réel d'un flux de contenus multimédias, d'un besoin de largeur de bande supplémentaire pour la transmission du flux de contenus multimédias, pour au moins un essaim de canaux actuel (206) dans un réseau de poste à poste (1130, 1170) ;
un moyen pour effectuer la décision d'allouer ou pas au moins une ressource d'un groupe (1240) de ressources à l'essaim de canaux actuel (206) afin d'obtenir ladite largeur de bande supplémentaire pour la transmission du flux de contenus multimédias, en utilisant la largeur de bande disponible dans l'essaim de canaux (206), sur la base au moins partiellement d'informations dynamiques sur au moins un poste dans l'essaim de canaux actuel (206) ; et
un moyen pour effectuer l'assignation (506, 507) d'au moins une ressource du groupe (1240) de ressources pour fournir la largeur de bande supplémentaire à l'essaim de canaux (206) ;
**caractérisé en ce que**
ledit flux de contenus multimédias est un flux en direct de contenus multimédias ;
ledit réseau de poste à poste (1130, 1170) comprend plusieurs essaims de canaux (206) transmettant des contenus multimédias en temps réel, générés par plusieurs diffuseurs respectifs (1140) associés à plusieurs canaux respectifs ; et
ladite décision comprend la détermination d'un degré de besoin de ressources de chaque canal et l'allocation de ressources aux dits canaux en conséquence.

15. Produit de programme informatique, comprenant un code utilisable par ordinateur comprenant des sections de code aptes à effectuer les étapes du procédé selon l'une quelconque des revendications 1 à 13 lorsqu'elles sont exécutées par un ordinateur, un processeur ou un autre moyen électronique.
